**Europäisches Patentamt**

**European Patent Office**

**Office européen des brevets**

(11) Veröffentlichungsnummer: **0 292 583 B1**

## EUROPÄISCHE PATENTSCHRIFT

(45) Veröffentlichungstag der Patentschrift: **29.07.92**

(51) Int. Cl.⁵: **G01N 29/04**, G01N 29/10

(21) Anmeldenummer: **87107538.8**

(22) Anmeldetag: **23.05.87**

(54) **Vorrichtung zur Prüfung eines Rohres.**

(43) Veröffentlichungstag der Anmeldung:
**30.11.88 Patentblatt 88/48**

(45) Bekanntmachung des Hinweises auf die
Patenterteilung:
**29.07.92 Patentblatt 92/31**

(84) Benannte Vertragsstaaten:
**AT BE CH DE ES FR GB GR IT LI NL SE**

(56) Entgegenhaltungen:
**EP-A- 0 067 065**
**US-A- 3 110 860**
**US-A- 3 555 887**

(73) Patentinhaber: **SIEMENS AKTIENGESELL-
SCHAFT**
**Wittelsbacherplatz 2**
**W-8000 München 2(DE)**

(72) Erfinder: **Lang, Raimund, Dipl.-Ing.**
**Friedensstrasse 25**
**W-8755 Altenau 2(DE)**
Erfinder: **Goncharov, U.G., Dr.**
**Dzerjinskojo 18a, Ap. 26**
**Dnepropetrovsk 320 027(SU)**

EP 0 292 583 B1

## Beschreibung

Die Erfindung betrifft eine Vorrichtung zur Prüfung eines Rohres nach dem Oberbegriff des Anspruches 1.

Eine solche Vorrichtung ist der EP-A- 00 67 065 zu entnehmen. Das zu prüfende Rohr wird von zwei im Abstand zueinander angeordneten Ringpolen umgeben, die zueinander entgegengesetzte Magnetpole aufweisen. Hierdurch wird im Rohr zwischen den Ringpolen ein achsparalleles Magnetfeld erzeugt. Im Spalt zwischen den Ringpolen ist eine das Rohr umgebende Spulenanordnung vorgesehen, welche sechs Spulen aufweist, die gleichmäßig über den Umfang der Spulenanordnung verteilt angeordnet sind, wobei die Spulenachsen radial zum Rohr verlaufen. Den sechs Spulen werden elektrische Impulse zugeführt, wodurch auf elektromagnetische Weise Ultraschallimpulse erzeugt werden, die nach dem Eindringen in das Rohr dort durch die Innenwand bzw. durch Fehlerstellen in der Rohrwandung reflektiert werden. Die reflektierten Ultraschallwellen werden von den Spulen erfaßt und einer Auswerteschaltung zugeführt, welche die erzeugten Impulse mit den reflektierten Impulsen vergleicht. Auf diese Weise können Fehlerstellen in der Rohrwandung bzw. die Dicke der Rohrwandung erfaßt werden.

Bei dieser bekannten Vorrichtung ist nachteilig, daß nur diejenigen Bereiche der Rohrwandung geprüft werden können, die sich im Bereich der sechs Spulen befinden. Die zwischen den Spulen befindlichen Bereiche werden bei der Prüfung nicht erfaßt. Weist beispielsweise das Rohr an einer zwischen zwei Spulen befindlichen Stelle eine Lunkerstelle auf, dann wird diese bei der Rohrprüfung nicht erfaßt. Dieser Nachteil tritt auch dann auf, wenn bei einer Relativbewegung zwischen der Prüfvorrichtung und dem Rohr in Richtung der Rohrachse das Rohr gleichzeitig in Drehung versetzen würde. Ein weiterer Nachteil ist darin zu sehen, daß die Auswerteschaltung infolge der sechs Spulen eine Vielzahl von Daten verarbeiten und daher eine große Kapazität aufweisen muß.

Eine Drehung der Prüfvorrichtung um das Rohr ist wegen der Vielzahl der elektrischen Anschlüsse nicht möglich.

In US-A-3 110 860 wird eine Wirbelstromprüfvorrichtung beschrieben, bei der eine Spulenanordnung verwendet wird, die einen Innendurchmesser aufweist, der größer ist als der Außendurchmesser des Rohres, und die eine Kreisbewegung entsprechend Anspruch 1 ausführt, dazu aber eine aufwendige Mechanik und Steuerung benötigt.

Es besteht die Aufgabe, die Vorrichtung gemäß EP-A-0 067 065 so auszubilden, daß eine lückenlose Prüfung des gesamten Rohrumfangs möglich ist.

Gelöst wird diese Aufgabe mit den kennzeichnenden Merkmalen des Anspruches 1. Vorteilhafte Ausgestaltungen sind den Unteransprüchen entnehmbar.

Ein Ausführungsbeispiel wird nachfolgend anhand der Zeichnungen näher erläutert. Es zeigen:

Fig. 1    einen Querschnitt längs der Linie I-I in Fig. 2

Fig. 2    einen horizontalen Längsschnitt längs der Linie II-II in Fig. 1.

Die Vorrichtung weist in bekannter Weise eine Ringmagnetanordnung auf, die aus zwei gleichstromdurchflossenen Ringspulen 1 und 2 besteht, durch die der Gleichstrom in entgegengesetzter Richtung fließt. Hierdurch weist der Ringpol 3 eine Polarisierung N und der Ringpol 4 eine Polarisierung S auf. Die Ringspulen 1, 2 sind von ringförmigen Jochen 5, 6 umgeben, welche über längsverlaufende Joche 7 miteinander verbunden sind, die den magnetischen Rückschluß bewirken. Die Ringpole 3, 4 sind konzentrisch zu zum prüfenden Rohr 8 angeordnet, wodurch in der Rohrwandung über den gesamten Umfang hinweg zwischen den Ringpolen 3, 4 ein achsparallel verlaufender gleichmäßig verteilter Magnetfluß erzeugt wird.

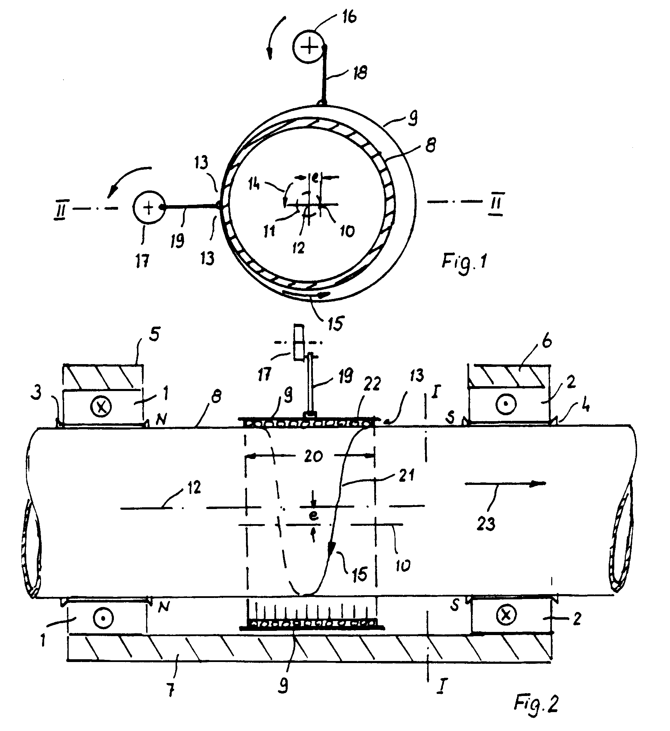

Die in Fig. 1 schematisch dargestellte Spulenanordnung 9 ist kreisförmig ausgebildet und weist einen Innendurchmesser auf, der größer ist als der Außendurchmesser des Rohres 8. Bevorzugt ist der Innendurchmesser zwischen 10 und 20% größer als der Rohraußendurchmesser. Die Spulenanordnung 9 ist stets exzentrisch zum Rohr 8 angeordnet. Der Kreismittelpunkt der Spulenanordnung 9 führt eine Kreisbewegung 11 um die Rohrachse 12 aus. Die Exzentrizität e ist so gewählt, daß die Innenwand der Spulenanordnung 9 in jeder Stellung der Spulenanordnung 9 an der Rohraußenwand anliegt. Der augenblicklich aneinanderliegende Bereich von Spulenanordnung 9 und Rohr 8 ist mit 13 bezeichnet. Bewegt sich der Mittelpunkt 10 der Spulenanordnung 9 längs des Kreises 11 mit der Exzentrizität e in Pfeilrichtung 14, dann läuft dieser Berührungsbereich 13 in Pfeilrichtung 15 um den Rohrumfang herum. Die Spulenanordnung 9 dreht sich hierbei nicht um ihre Achse 10.

Die Exzenterbewegung der Spulenanordnung 9 wird im gezeigten Ausführungsbeispiel durch zwei sich synchron drehende Exzenterscheiben 16, 17 bewirkt, die rechtwinklig zueinander angeordnet sind. Zwischen der Spulenanordnung 9 und der Exzenterscheibe 16 sowie der Exzenterscheibe 17 verläuft jeweils eine Pleuelstange 18, 19, die jeweils exzentrisch an den Exzenterscheiben 16, 17 angelenkt sind. Die Kreisbewegung der Spulenachse 10 um die Rohrachse 12 und damit der Umlauf des Berührungsbereichs 13 in Pfeilrichtung 15 wird bewirkt, wenn die Exzenterscheiben 16, 17 sich jeweils im Gegenuhrzeigersinn drehen, was durch die Pfeile bei diesen Scheiben 16, 17 angedeutet ist.

Da die Spulenanordnung 9 sich selbst nicht um ihre Achse 10 dreht, ist es auf einfache Weise möglich, die elektrischen Verbindungen zu ihr durch flexible Kabel herzustellen.

Im gezeigten Ausführungsbeispiel weist die Spulenanordnung eine einzige Ringspule 22 auf. Die Spulen, die die Spulenanordnung 9 trägt, können jedoch zur Anregung von Oberflächen-, Transversal- oder Longitudinalwellen auch anders ausgebildet sein. Die Spule kann beispielsweise eine Meanderform aufweisen, entsprechend der US-A- 38 50 028 oder kann um Stege gewickelt sein entsprechend der DE-B- 26 55 804. Soll die Einschallung schräg erfolgen, ist es möglich, mehrere aufeinanderfolgend angeordnete Spulen vorzusehen, wie beispielsweise in der US-A- 35 55 887 gezeigt. Die Spulenanordnung kann eine oder mehrere Sendespulen und eine oder mehrere Empfangsspulen aufweisen. Es ist jedoch auch möglich, eine oder mehrere Spulen vorzusehen, die Sende- und gleichzeitig Empfangsspulen darstellen. Bei Verwendung mehrerer Einzelspulen ist darauf zu achten, daß diese über den Umfang der Spulenanordnung 9 so angeordnet sind, daß keine Lücken zwischen den einzelnen Spulen entstehen. Bevorzugt sollen die Einzelspulen einander überlappen. Hierdurch ist gewährleistet, daß an jeder Stelle des Umfangs des Rohres 8 eine Messung möglich ist.

Bei der Prüfung des Rohres 8 führt dieses eine Axialbewegung in Pfeilrichtung 23 aus. Die axiale Länge 20 der Spulenanordnung 9 ist dabei auf die Geschwindigkeit des Rohres 8 in Pfeilrichtung 23 abgestimmt, derart, daß die Länge 20 größer ist als diejenige Rohrlänge, um die das Rohr in Pfeilrichtung 23 verschoben wird, wenn die Achse 10 eine vollständige Kreisbewegung 11 um den Rohrmittelpunkt 12 ausführt. Die Mitte des Berührungsbereichs 13 in Axialrichtung gesehen, verläuft dann wendelförmig längs der Oberfläche des Rohres 9, wie in Figur 2 durch den Wendelabschnitt 21 angedeutet. Damit ist eine lückenlose Prüfung des gesamten Rohrumfangs über die gesamte Rohrlänge hinweg möglich. Die von der Spulenanordnung 9 ausgesandten Ultraschallimpulse werden im in Pfeilrichtung 15 umlaufenden Berührungsbereich 13 in die Wand des Rohres 8 eingeschallt. Die in diesem Berührungsbereich 13 reflektierten Ultraschallwellen werden dann ebenso von der Spulenanordnung 9 empfangen und der nicht dargestellten Auswerteschaltung zugeführt.

**Patentansprüche**

1. Vorrichtung zur Prüfung eines Rohres (8) mit elektromagnetischen Ultraschallwellen, bestehend aus einer Ringmagnetanordnung mit zwei entgegengesetzt den Magnetpolen (N,S) aufweisenden Ringpolen (3,4), die im Abstand zueinander das Rohr (8) umgeben und in diesem ein achsparalleles Magnetfeld erzeugen sowie aus einer das Rohr (8) umgebenden ringförmigen Spulenanordnung (9), die im Bereich des achsparallelen Magnetfeldes angeordnet ist und die die Ultraschallimpulse erzeugt und die reflektierten Ultraschallwellen empfängt, die einer Auswerteschaltung zugeführt werden, welche die reflektierten mit den erzeugten Ultraschallwellen vergleicht,
dadurch gekennzeichnet, daß die Wicklungen der Spulenanordnung (9) den gesamten Umfang der Spulenanordnung (9) einnehmen, die Spulenanordnung (9) einen Innendurchmesser aufweist, der größer ist als der Außendurchmesser des Rohres (8), die Achse (10) der Spulenanordnung (9) exzentrisch zur Rohrachse (12) verläuft und diese Achse (10) eine zum Rohr (8) zentrische Kreisbewegung (11) ausführt, bei der die Spulenanordnung (9) in zwei senkrecht zueinander und senkrecht zur Rohrachse (12) verlaufenden Achsen durch zwei sich synchron drehende Exzenterscheiben (16,17), mit jeweils einer exzentrisch angelenkten Pleuelstange (18,19), wobei die Exzenterscheiben rechtwinklig zueinander angeordnet sind, bewegt wird, wobei die jeweilige Meßstelle der Rohrbereich ist, der der Spulenanordnung (9) am nächsten liegt.

2. Vorrichtung nach Anspruch 1, dadurch **gekennzeichnet,** daß der Innendurchmesser der Spulenanordnung (9) maximal 25% größer ist als der Außendurchmesser des Rohres (8).

3. Vorrichtung nach Anspruch 1 oder 2, dadurch **gekennzeichnet,** daß zwischen dem Rohr (8) und der Vorrichtung eine Relativbewegung (23) in Richtung der Rohrachse (12) herrscht.

4. Vorrichtung nach einem der Ansprüche 1 bis 3, dadurch **gekennzeichnet,** daß die Spulenanordnung (9) das Rohr (8) umlaufend berührt.

5. Vorrichtung nach Anspruch 3, dadurch **gekennzeichnet,** daß die Spulenanordnung (9) eine axiale Länge (20) aufweist, die größer ist als diejenige Rohrlänge, um die das Rohr (8) bei einer Kreisbewegung der Achse (10) der Spulenanordnung (9) relativ zu dieser verschoben wird.

6. Vorrichtung nach einem der Ansprüche 1 bis 5, dadurch **gekennzeichnet,** daß die Wicklungen der Spulenanordnung (9) ringförmig das Rohr (8) umgebend ausgebildet sind.

7. Vorrichtung nach einem der Ansprüche 1 bis 5, dadurch **gekennzeichnet,** daß die Spulenanordnung (9) mehrere Einzelspulen aufweist, die über den Umfang der Spulenanordnung (9) einander überlappend angeordnet sind.

## Claims

1. Device for the examination of a tube (8) with electromagnetic ultrasonic waves, comprising an annular magnet arrangement with two annular poles (3,4) having the opposing magnet poles (N,S), the annular poles surrounding the tube (8) at a distance to one another and generating therein an axis-parallel magnetic field, and also comprising an annular coil arrangement (9) surrounding the tube (8), the coil arrangement being arranged in the region of the axis-parallel magnetic field and generating the ultrasonic pulses and receiving the reflected ultrasonic waves, which are supplied to an evaluation circuit, which compares the reflected ultrasonic waves with those generated,
   characterized in that the windings of the coil arrangement (9) occupy the entire circumference of the coil arrangement (9), the coil arrangement (9) has an inner diameter which is greater than the outer diameter of the tube (8), the axis (10) of the coil arrangement (9) extends eccentrically to the tube axis (12) and this axis (10) carries out a circular movement (11) which is central to the tube (8), whereby the coil arrangement (9) is moved in two axes extending perpendicular to one another and perpendicular to the tube axis (12) by means of two synchronously rotating eccentric discs (16,17) with in each case an eccentrically hinged connecting rod (18,19), whereby the eccentric discs are arranged at right angles to one another, whereby the respective measuring point is the tube region which is adjacent to the coil arrangement (9).

2. Device according to claim 1,
   characterized in that the inner diameter of the coil arrangement (9) is a maximum of 25% larger than the outer diameter of the tube (8).

3. Device according to claim 1 or 2,
   characterized in that between the tube (8) and the device a relative movement (23) prevails in the direction of the tube axis (12).

4. Device according to one of claims 1 to 3,
   characterized in that the coil arrangement (9) makes circumferential contact with the tube (8).

5. Device according to claim 3,
   characterized in that the coil arrangement (9) has an axial length (20) which is greater than that tube length about which the tube (8) with a circular movement of the axis (10) of the coil arrangement (9) is displaced relative thereto.

6. Device according to one of claims 1 to 5,
   characterized in that the windings of the coil arrangement (9) are constructed so that they surround the tube (8) in an annular manner.

7. Device according to one of claims 1 to 5,
   characterized in that the coil arrangement (9) has several single coils, which are arranged over the circumference of the coil arrangement (9) so that they overlap one another.

## Revendications

1. Dispositif pour contrôler un tube (8) à l'aide d'ondes ultrasonores électromagnétiques, constitué par un dispositif magnétique annulaire comportant deux pôles annulaires (3,4) de sens opposé aux pôles magnétiques (N,S) et qui entourent, à distance l'un de l'autre, le tube (8) et produisent dans ce dernier un champ magnétique parallèle à l'axe, ainsi que par un dispositif à bobine annulaire (9), qui entoure le tube (8), est disposé dans la zone du champ de l'aimant parallèle, produit les impulsions ultrasonores et reçoit les ondes ultrasonores réfléchies, qui sont envoyées à un circuit d'évaluation qui compare les ondes ultrasonores réfléchies aux ondes ultrasonores produites,
   caractérisé par le fait que les enroulements du dispositif à bobine (9) occupent la totalité de la périphérie du dispositif à bobine (9), que ce dernier possède un diamètre intérieur supérieur au diamètre extérieur du tube (8), que l'axe (10) du dispositif à bobine (9) possède un diamètre intérieur supérieur au diamètre extérieur du tube (8), que l'axe (10) du dispositif à bobine (9) est excentré par rapport à l'axe (12) du tube et que cet axe (10) exécute un déplacement circulaire (11) centré sur le tube (8) et, lors duquel le dispositif à bobine (9) est déplacé suivant deux axes perpendiculaires entre eux et à l'axe (12) du tube, par deux disques excentriques (16,17) tournant d'une manière synchrone et comportant chacun une bielle (18,19) articulée d'une manière excentrée, les disques excentriques étant perpendiculaires entre eux, tandis que le point respectif de mesure est la zone du tube qui est la plus proche du dispositif à bobine.

2. Dispositif suivant la revendication 1, caractérisé par le fait que le diamètre intérieur du dispositif à bobine (9) est supérieur, au maximum de 25 %, au diamètre extérieur du tube (8).

3. Dispositif suivant la revendication 1 ou 2, caractérisé par le fait qu'il existe un déplacement relatif (23) entre le tube (8) et le dispositif, en direction de l'axe (12) du tube.

4. Dispositif suivant l'une des revendications 1 à 3, caractérisé par le fait que le dispositif à bobine (9) est en contact, avec le tube (8), d'une manière enveloppante.

5. Dispositif suivant la revendication 3, caractérisé par le fait que le dispositif à bobine (9) possède une longueur axiale (20) supérieure à la longueur de tube, dont le tube (8) doit être déplacé par rapport au dispositif à bobine (9) dans le cas d'un déplacement circulaire de l'axe (10) du dispositif à bobine.

6. Dispositif suivant l'une des revendications 1 à 5, caractérisé par le fait que les enroulements du dispositif à bobine (9) sont agencés de manière à entourer sous forme annulaire le tube (8).

7. Dispositif suivant l'une des revendications 1 à 5, caractérisé par le fait que le dispositif à bobine (9) possède plusieurs bobines individuelles, qui sont agencées en chevauchement sur le pourtour du dispositif à bobine (9).

Fig.1

Fig.2